# EUROPÄISCHE PATENTSCHRIFT

(11) **EP 3 401 125 B1**
(45) Veröffentlichungstag und Bekanntmachung des Hinweises auf die Patenterteilung: **29.01.2020**
(21) Anmeldenummer: 18157339.5
(22) Anmeldetag: 19.02.2018
(51) Int. Cl.: B60C 11/13, B60C 11/12, B60C 11/03

(54) **LAUFSTREIFENPROFIL EINES FAHRZEUGREIFENS**
RUN STRIP PROFILE OF A VEHICLE TYRE
PROFIL DE BANDE DE ROULEMENT D'UN PNEU DE VÉHICULE

(30) Priorität: 10.05.2017 DE 102017207919
(43) Veröffentlichungstag der Anmeldung: 14.11.2018
(73) Patentinhaber: Continental Reifen Deutschland GmbH, 30165 Hannover (DE)
(72) Erfinder: Rittweger, Stefan, 30826 Garbsen (DE)
(74) Vertreter: Finger, Karsten

(56) Entgegenhaltungen:
- DE-A1-102012 108 384
- JP-A- 2011 073 471

## Beschreibung

Die Erfindung betrifft ein Laufstreifenprofil eines Fahrzeugreifens - insbesondere eines PKW-Fahrzeugreifens - mit durch Umfangsrillen voneinander getrennten Profilbändern und mit in Profilbändern ausgebildeten Feineinschnitten, mit einem Profilband, in welchem Feineinschnitte mit einem ersten Erstreckungsabschnitt mit größter Richtungskomponente der Erstreckung in Umfangsrichtung U und mit einem zweiten Erstreckungsabschnitt mit größter Richtungskomponente in axialer Richtung A, welcher in eine Umfangsrille mündet, ausgebildet sind, wobei erste Feineinschnitte, deren zweiter Erstreckungsabschnitt in eine das Profilband begrenzende Umfangrille mündet, und zweite Feineinschnitte ausgebildet sind, deren zweiter Erstreckungsabschnitt in eine andere das Profilband begrenzende Umfangrille mündet.

Es ist bekannt, Profilrippen im mittleren Bereich eines Laufstreifenprofils eines PKW-Fahrzeugreifens mit Feineinschnitten auszubilden, die meist mit einem schrägen Winkel von 45 Grad zur Umfangsrichtung ausgerichtet sind. Dies ermöglicht die Erzielung eines Kompromisses hinsichtlich Geräuschanregung, Abriebeigenschaften und Formkomplexität auszubilden. Zur Erzielung guter Nasshandling-Eigenschaften wäre es dabei wünschenswert, die Feineinschnitte möglichst vollständig in Umfangsrichtung ausgerichtet auszubilden, da dann sehr lange Kantenlängen zur Übertragung von Querkräften zur Verfügung ständen. Eine derartige Ausbildung geht jedoch zu Lasten von Nassbremseigenschaften, da die Feineinschnitte dann kaum Kanten zur Übertragung der Bremskräfte zur Verfügung stellen. Zur Erzielung guter Nassgriffeigenschaften wäre es daher wünschenswert, die Feineinschnitte möglichst vollständig in axialer Richtung A auszurichten, um auf diese Weise möglichst optimale Griffkanten zur Übertragung der Bremskräfte zur Verfügung zu stellen. Hierdurch würden jedoch kaum Griffkanten zur Übertragung von Querkräften zur Verfügung stehen, wodurch die Nasshandlingeigenschaften deutlich reduziert würden. Darüber hinaus würde durch diese Ausbildung die Geräuschentstehung deutlich erhöht werden, da derartig rein in axialer Richtung gerichtete Feineinschnitte beim Abrollen des Fahrzeugreifens zu einem gleichzeitigen Aufschlagen der gesamten Griffkante und somit zur deutlichen Geräuschanregung beitragen würden. Die rein umfangsorientierten Feineinschnitte würden zwar keine zusätzliche Geräuschbildung erzeugen, allerdings würde die Wasserableitung aus der Umfangsrippe in die Umfangsrillen deutlich reduziert, wodurch Nassgriff- und Aquaplaning-Eigenschaften verschlechtert würden.

Aus der DE 10 2012 108 384 A1 ist ein Laufstreifenprofil eines Fahrzeugluftreifens mit durch Umfangsrillen voneinander getrennten Umfangsrippen bekannt, bei dem in einer Umfangsrippe Feineinschnitte mit einem ersten Erstreckungsabschnitt, in dem sich der Feineinschnitt vollständig in Umfangsrichtung erstreckt und mit einem zweiten Erstreckungsabschnitt, bei dem der Feineinschnitt schräg verlaufend bis zur Umfangsrille ausgerichtet ist und dabei eine größere Richtungskomponente in axialer Richtung als in Umfangsrichtung aufweist. Dabei sind in Umfangsrichtung gesehen wechselweise erste Feineinschnitte angeordnet, deren im Wesentlichen axialer Erstreckungsabschnitt in die eine Umfangsrille mündet und zweite Feineinschnitte, deren im Wesentlichen axialer Erstreckungsabschnitt in die andere Umfangsrille mündet. Die ersten und zweiten Feineinschnitte sind dabei so in der Umfangsrippe hintereinander angeordnet, dass ihre in Umfangsrichtung erstreckten ersten Erstreckungsabschnitte jeweils in gleicher axialer Position in der Umfangsrippe angeordnet sind und somit auf einer über den Umfang des Fahrzeugluftreifens erstreckten Linie hintereinander angeordnet sind. Die Ausbildung ermöglicht dabei mit ihren in reiner Umfangsrichtung ausgerichteten ersten Erstreckungsabschnitten der Feineinschnitte eine Aufnahme des Wassers und eine Ableitung durch die quer verlaufenden zweiten Erstreckungsabschnitte in die benachbarten Umfangsrillen und aufgrund der reinen Umfangsorientierung des ersten Erstreckungsabschnitts und der Schrägorientierung des zweiten Erstreckungsabschnitts eines jeden der Feineinschnitte eine Reduzierung der Geräuschentwicklung. Durch die Ausbildung der Feineinschnitte mit ersten Erstreckungsabschnitten, die in Umfangsrichtung ausgerichtet sind, und mit zweiten Erstreckungsabschnitten, die eine größere Erstreckungsrichtungskomponente in axialer Richtung als in Umfangsrichtung ausweisen, wird darüber hinaus das Handling verbessert und dabei durch die Erstreckungsabschnitte der Feineinschnitte mit im Wesentlichen axialer Richtungskomponente Nassbremsen begünstigt.

Dennoch sind auch bei dieser Ausbildung Nasshandling-Eigenschaften und NassbremsEigenschaften aufgrund der beschränkten Möglichkeit der Ausbildung von Griffkanten in Quer- und Umfangsrichtung noch stark eingeschränkt.

Aus der JP 2011073471 A ist ein Laufstreifenprofil eines Fahrzeugreifens gemäß den Merkmalen des Anspruchs 1 bekannt.

Der Erfindung liegt die Aufgabe zugrunde, bei einem derartigen Fahrzeugreifen mit Profilband und Feineinschnitten eine reduzierte Geräuschbildung bei guten Nasshandling-und Nassbremseigenschaften zu ermöglichen.

Die Aufgabe wird erfindungsgemäß durch die Ausbildung eines Laufstreifenprofils eines Fahrzeugreifens - insbesondere eines PKW-Fahrzeugreifens - mit durch Umfangsrillen voneinander getrennten Profilbändern und mit in Profilbändern ausgebildeten Feineinschnitten, mit einem Profilband, in welchem Feineinschnitte mit einem ersten Erstreckungsabschnitt mit größter Richtungskomponente der Erstreckung in Umfangsrichtung U und mit einem zweiten Erstreckungsabschnitt mit größter Richtungskomponente in axialer Richtung A, welcher in eine Umfangsrille mündet, ausgebildet sind, wobei erste Feineinschnitte, deren zweiter Erstreckungsabschnitt in eine das Profilband begrenzende Umfangrille mündet, und zweite Feineinschnitte ausgebildet sind, deren zweiter Erstreckungsabschnitt in eine andere das Profilband begrenzende Umfangrille mündet, gemäß den Merkmalen von Anspruch 1 gelöst, bei dem über den Umfang des Profilbandes hinweg jeweils Paare von axial nebeneinander ausgebildeten ersten und zweiten Feineinschnitten ausgebildet sind, deren erster Erstreckungsabschnitt parallel zueinander ausgerichtet und in ihrer Umfangserstreckung unter Überlappung zueinander positioniert sind, bei dem die zweiten Erstreckungsabschnitte der beiden Feineinschnitte axial beabstandet zueinander positioniert sind, und bei dem einer der beiden Feineinschnitte in einem Bereich seiner Erstreckung im Übergang zu der das Profilband in radialer Richtung R nach außen hin begrenzenden Oberfläche mit einer Fase ausgebildet sind, wobei dieser Bereich bis zur Einmündung des zweiten Erstreckungsabschnitts des Feineinschitts in die Umfangsrille erstreckt ist, wobei der Feineinschnitt eine Knickstelle im Verlauf aufweist, an der der erste Erstreckungsabschnitt an den zweiten Erstreckungsabschnitt grenzt, und wobei der mit Fase ausgebildete Bereich in einem Profilband ausgehend von der Umfangsrille über den zweiten Erstreckungsabschnitt des Feineinschnitts, über die Knickstelle hinweg bis in den ersten Erstreckungsabschnitt des Feineinschnitts erstreckt ist und - insbesondere mit Abstand zu dem von der Knickstelle wegweisenden Erstreckungsende des ersten Erstreckungsabschnitts - endet.

Diese Ausbildung ermöglicht es, bei einem derartigen Fahrzeugluftreifen in einem Profilband durch die paarweise Ausbildung der Feineinschnitte eine hohe Anzahl von im Wesentlichen in Umfangsrichtung ausgerichteten Feineinschnittsabschnitten und somit eine erhöhte Anzahl von Griffkanten zur Übertragung von Querkräften und dabei eine erhöhte Anzahl von Erstreckungsabschnitten von Feineinschnitten mit größerer axialer Erstreckungsrichtungskomponente zur Übertragung von in Umfangsrichtung gerichteten Kräften bereitzustellen. Hierdurch kann eine hohe Zahl von Griffkanten sowohl für besseres Nassgriff- als auch für die Erzielung eines verbesserten Nasshandlingverhaltens in einfacher Weise bereitgestellt werden. Die paarweise Anordnung der Feineinschnitte mit axialem Abstand ihrer zweiten Erstreckungsabschnitte zueinander und mit paralleler Anordnung ihrer ersten Erstreckungsabschnitte ermöglicht dabei die Sicherstellung eines steifen Kernbereichs des Profilbandes über den Umfang des Reifens hinweg, wodurch gute Trocken- und Nasshandlingeigenschaften weiter verbessert werden können. Die Ausbildung der Feineinschnitte mit ihren großen Erstreckungsabschnitten in Umfangsrichtung begünstigt weiterhin die Erzielung eines geringen Geräuschentwicklungsniveaus. Die Ausbildung eines der beiden Feineinschnitte mit einer Fase, welche sich bis zur Umfangsrille hin erstreckt, begünstigt dabei trotz hoher Griffkantenzahl der paarweisen Anordnung der Feineinschnitte die Sicherstellung der Geräuschbildung auf sehr geringem Niveau. Die paarweise Anordnung und die Fase begünstigen darüber hinaus eine zuverlässige gute Wasserableitung aus dem Bereich des Profilbandes bis zur Umfangsrille. Somit ermöglicht die Ausbildung die Erzielung besonders guter Nasshandlingeigenschaften und Nassbremseigenschaften bei sehr geringer Geräuschbildung. Durch die Ausbildung des mit Fase ausgebildeten Bereichs über die Knickstelle hinweg bis in den ersten Erstreckungsabschnitt kann die Wasserableitungswirkung durch die Fase in die Umfangsrille besonders wirksam umgesetzt werden.

Besonders vorteilhaft ist die Ausbildung eines Fahrzeugreifens gemäß den Merkmalen von Anspruch 2, wobei bei wenigstens einem Feineinschnitt des Paares der erste Erstreckungsabschnitts länger erstreckt ausgebildet ist als der zweite Erstreckungsabschnitt. Hierdurch können die Nasshandlingeigenschaften weiter verbessert werden.

Besonders vorteilhaft ist die Ausbildung eines Fahrzeugreifens gemäß den Merkmalen von Anspruch 3, wobei bei diesem Feineinschnitt die Fase ausgebildet ist. Hierdurch kann das Wasser aus dem mit langem ersten Erstreckungsabschnitt gebildeten langen Aufnahmekanal des Feineinschnitt verbessert abgeleitet werden.

Besonders vorteilhaft ist die Ausbildung eines Fahrzeugreifens gemäß den Merkmalen von Anspruch 4, wobei der andere Feineinschnitt fasenfrei ausgebildet ist. Hierdurch kann trotz guter Drainage über den anderen Feineinschnitt eine hohe Quersteifigkeit des Profilbandes umgesetzt und somit können gute Trockenhandlingeigenschaften weiter begünstigt werden.

Besonders vorteilhaft ist die Ausbildung eines Fahrzeugreifens gemäß den Merkmalen von Anspruch 5, wobei der mit Fase ausgebildete Bereich in einem Profilband ausgehend von der Umfangsrille im zweiten Erstreckungsabschnitt des Feineinschnitts ausgebildet ist und vor dem Übergang zum ersten Erstreckungsabschnitt endet. Dies ermöglicht einen optimalen Kompromiss für die Erzielung von zusätzlich besonders guten TrockenhandlingEigenschaften. Besonders wirksam ist dies beim Einsatz von axial äußeren Profilbändern des Fahrzeugreifens.

Besonders vorteilhaft ist die Ausbildung eines Fahrzeugreifens gemäß den Merkmalen von Anspruch 6, wobei der zweite Erstreckungsabschnitt in seiner Erstreckungsverlauf unter Einschluss eines Neigungswinkels β mit 0°≤β≤30° - insbesondere mit 0°≤β≤20° - zur axialen Richtung A ausgerichtet ist, und wobei insbesondere der erste Erstreckungsabschnitt in seiner Erstreckungsverlauf unter Einschluss eines Neigungswinkels α mit 0°≤α≤15° zur Umfangsrichtung U ausgerichtet ist.

Besonders vorteilhaft ist die Ausbildung eines Fahrzeugreifens gemäß den Merkmalen von Anspruch 7, wobei in einem Profilband die beiden Feineinschnitte eines Paares in ihrer Erstreckungsrichtung ausgehend von der jeweiligen Umfangsrille über den zweiten Erstreckungsabschnitt und den ersten Erstreckungsabschnitt bis zu dem vom zweiten Erstreckungsabschnitt wegweisenden Erstreckungsende des ersten Erstreckungsabschnitts und somit des Feineinschnitts mit zueinander entgegengesetzter Orientierung der Umfangserstreckung ausgerichtet sind. Diese Ausbildung ermöglicht in einfacher Weise die optimale Umsetzung unter Nutzung der Vorteile dieser Anordnung von Paaren von Feineinschnitten in beide Drehrichtungen des Fahrzeugreifens.

Besonders vorteilhaft ist die Ausbildung eines Fahrzeugreifens gemäß den Merkmalen von Anspruch 8, wobei in einem Profilband die beiden Feineinschnitte eines Paares in ihrer Erstreckungsrichtung ausgehend von der jeweiligen Umfangsrille über den zweiten Erstreckungsabschnitt und den ersten Erstreckungsabschnitt bis zu dem vom zweiten Erstreckungsabschnitt wegweisenden Erstreckungsende des ersten Erstreckungsabschnitts und somit des Feineinschnitts mit gleicher Orientierung der Umfangserstreckung ausgerichtet sind. Diese Ausbildung ermöglicht in einfacher Weise eine optimale Umsetzung unter Nutzung der Vorteile dieser Anordnung von Paaren von Feineinschnitten in eine Drehrichtung des Fahrzeugreifens.

Besonders vorteilhaft ist die Ausbildung eines Fahrzeugreifens gemäß den Merkmalen von Anspruch 9, wobei der eine Feineinschnitt eines Paares mit einer in Umfangsrichtung U gemessenen größeren Gesamterstreckungslänge L₁ als der andere Feineinschnitt ausgebildet ist, welche jeweils die in Umfangsrichtung U ausgehend von der Einmündung des zweiten Erstreckungsabschnitt des jeweiligen Feineinschnitts in die Umfangsrille über den zweiten Erstreckungsabschnitt und den ersten Erstreckungsabschnitt bis zu dem vom zweiten Erstreckungsabschnitt wegweisenden Erstreckungsende des ersten Erstreckungsabschnitts und somit des Feineinschnitts gemessene Länge angibt, wobei bei dem längeren Feineinschnitt die Gesamterstreckungslänge L₁ und die in Umfangsrichtung U gemessene Erstreckungslänge L₂ des ersten Erstreckungsabschnittes mit 15mm≤ L₁ ≤30mm und 0,6L₁≤ L₂ ≤ L₁ ausgebildet sind. Dies ermöglicht eine optimale Umsetzung innerhalb der Pitchlängen von üblichen PKW-Reifen.

Besonders vorteilhaft ist die Ausbildung eines Fahrzeugreifens gemäß den Merkmalen von Anspruch 10, wobei der kürzere Feineinschnitt des Paares mit einer in Umfangsrichtung U gemessenen Gesamterstreckungslänge L₃ ausgebildet ist, wobei bei dem kürzeren Feineinschnitt die Gesamterstreckungslänge L₃ und die in Umfangsrichtung U gemessene Erstreckungslänge L₄ des ersten Erstreckungsabschnittes mit (1/3)L₁≤ L₃ <L₁ und 0,6L₃≤ L₄ ≤ L₃ ausgebildet sind. Dies ermöglicht in einfacher Weise gute Umsetzungen zur Erzielung besonders guter Nasshandlingeigenschaften und Nassbremseigenschaften bei sehr geringer Geräuschbildung und guter Trockenhandlingeigenschaften.

Besonders vorteilhaft ist die Ausbildung eines Fahrzeugreifens gemäß den Merkmalen von Anspruch **11**, wobei der kürzere Feineinschnitt des Paares in axialer Richtung A jeweils auf der zur Fahrzeugaußenseite (OU) hinweisenden Seite des Profilbandes des Reifens und der längere zur Fahrzeuginnenseite (IN) hinweisenden Seite des Profilbandes des Reifens positioniert ist. Hierdurch wird gerade die für Trockenhandlingeigenschaften wichtige, zur Fahrzeugaußenseite (OU) hinweisende Seite des Profilbandes in einfacher Weise mit erhöhter Quersteifigkeit und somit mit höherer Stabilität für Trockenhandling ausgebildet, wodurch die Trockenhandlingeigenschaften weiter verbessert werden können.

Besonders vorteilhaft ist die Ausbildung eines Fahrzeugreifens gemäß den Merkmalen von Anspruch **12**, wobei die Feineinschnitte eines Paares zumindest längs ihres zweiten Erstreckungsabschnitt weitgehend mit einer größeren Tiefe t₁ ausgebildet sind als im ersten Erstreckungsabschnitt. Hierdurch kann die Umfangsteifigkeit des Profilbandes gerade in dem die Umfangssteifigkeit wesentlich beeinflussenden zweiten Abschnitt des Feineinschnitts in einfacher Weise reduziert werden, wodurch geringer Rollwiderstand und Nässeeigenschaften - wie Nassbremsen - begünstigt werden.

Besonders vorteilhaft ist die Ausbildung eines Fahrzeugreifens gemäß den Merkmalen von Anspruch **13**, wobei die Feineinschnitte eines Paares mit ihrem ersten Erstreckungsabschnitt mit Abstand a mit 2mm≤a≤10mm - insbesondere mit 5mm≤a≤8mm - zueinander ausgebildet sind. Hierdurch kann die Ausbildung der Paare zur Erzielung guter Nasshandlingeigenschaften und Nassbremseigenschaften bei sehr geringer Geräuschbildung in besonders einfacher Weise unter ausreichend hoher Stabilität des Profilbandes umgesetzt werden.

Die Erfindung wird im Folgenden an Hand der in den Figuren 1 bis 6 dargestellten Ausführungsbeispiele näher erläutert. Hierin zeigen
- Fig. 1: einen Umfangsabschnitt des Laufstreifenprofils eines Fahrzeugluftreifens eines Personenkraftwagens (Pkw) in Draufsicht
- Fig. 2: Abschnitt des Laufstreifenprofils von Fig. 1 in Schnittdarstellung gemäß Schnitt II-II von Fig. 1
- Fig. 3: Abschnitt des Laufstreifenprofils von Fig. 1 in Schnittdarstellung gemäß Schnitt III-III von Fig. 1
- Fig. 4: Abschnitt des Laufstreifenprofils von Fig. 1 in Schnittdarstellung gemäß Schnitt IV-IV von Fig. 1
- Fig. 5: Abschnitt des Laufstreifenprofils von Fig. 1 in Schnittdarstellung gemäß Schnitt V-V von Fig. 1
- Fig. 6: Abschnitt des Laufstreifenprofils von Fig. 1 in Schnittdarstellung gemäß Schnitt VI-VI von Fig. 1

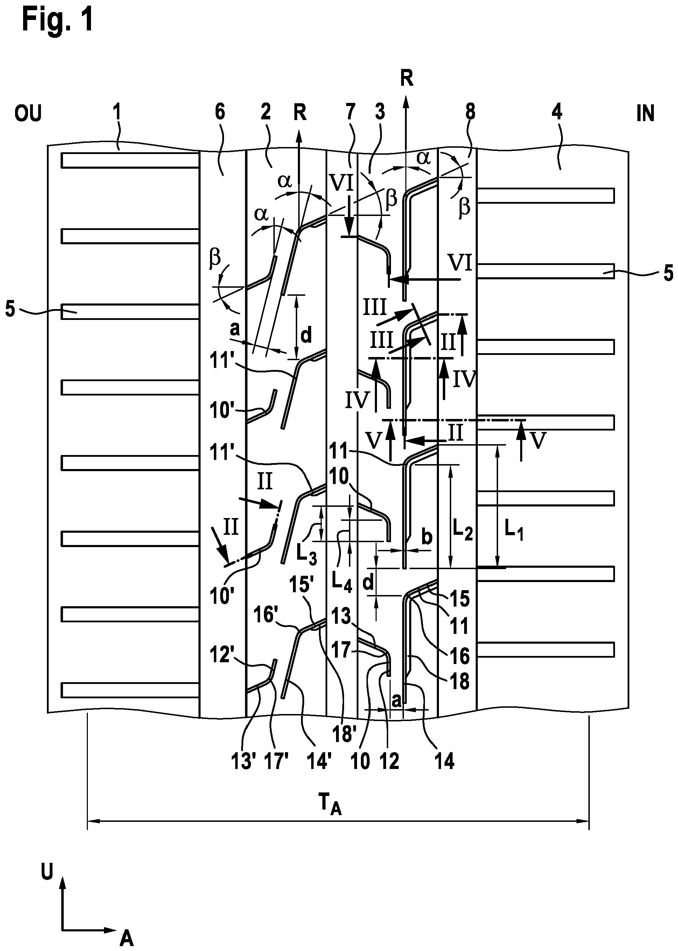

Fig.1 zeigt ein Laufstreifenprofil eines Fahrzeugluftreifens eines Personenkraftwagens (Pkw), bei dem mehrere über den gesamten Umfang des Fahrzeugluftreifens erstreckte und in Umfangsrichtung U ausgerichtete Umfangsrippen 1, 2, 3 und 4 in axialer Richtung A des Fahrzeugluftreifens nebeneinander angeordnet sind. Die Umfangsrippen 1 und 2 sind durch eine Umfangsrille 6, welche sich über den gesamten Umfang des Fahrzeugluftreifens erstreckt und in Umfangsrichtung U ausgerichtet ist, in axialer Richtung A voneinander getrennt. Die Umfangsrippen 2 und 3 sind in axialer Richtung A des Fahrzeugluftreifens durch eine über den gesamten Umfang des Fahrzeugluftreifens erstreckte und in Umfangsrichtung U ausgerichtete Umfangsrille 7 voneinander getrennt. Die Umfangsrippen 3 und 4 sind in axialer Richtung A durch eine über den gesamten Umfang des Fahrzeugluftreifens erstreckte und in Umfangsrichtung U ausgerichtete Umfangsrille 8 voneinander getrennt. Die Umfangsrippen 1 und 4 sind jeweils als in einer Reifenschulter ausgebildete Schulterrippen ausgebildet. Dabei ist die Umfangsrippe 1 in der am Fahrzeug zur Fahrzeugaußenseite OU weisende Schulter und die Umfangsrippe 4 in der am Fahrzeug zur Fahrzeuginnenseite IN hin weisenden Schulter ausgebildet.

Die Umfangsrippen 2 und 3 sind zwischen den als Schulterrippen ausgebildeten Umfangsrippen 1 und 4 als zentrale Umfangsrippen ausbildet. Wie in Fig.1 dargestellt ist, erstreckt sich die Bodenaufstandsbreite T_{A} des Fahrzeugluftreifens aus einem axialen Erstreckungsbereich innerhalb der Umfangsrippe 1 bis in eine Position im axialen Erstreckungsbereich der Umfangsrippe 4.

In den Umfangsrippen 1 und 4 sind jeweils über den Umfang des Fahrzeugluftreifens verteilt angeordnete Querrillen 5 bekannter Art ausgebildet, welche sich ausgehend von der an die jeweilige Umfangsrippe 1 bzw. 4 angrenzenden Umfangsrille 6 bzw. 8 in axialer Richtung A bis in den axialen Erstreckungsbereich außerhalb der Bodenaufstandsbreite T_{A} erstreckt und dort endet. In anderer nicht dargestellter Ausführung sind im Bereich der Reifenschulter die anstelle der Umfangsrippen 1 bzw. 4 Profilblockreihen bekannter Art ausgebildet.

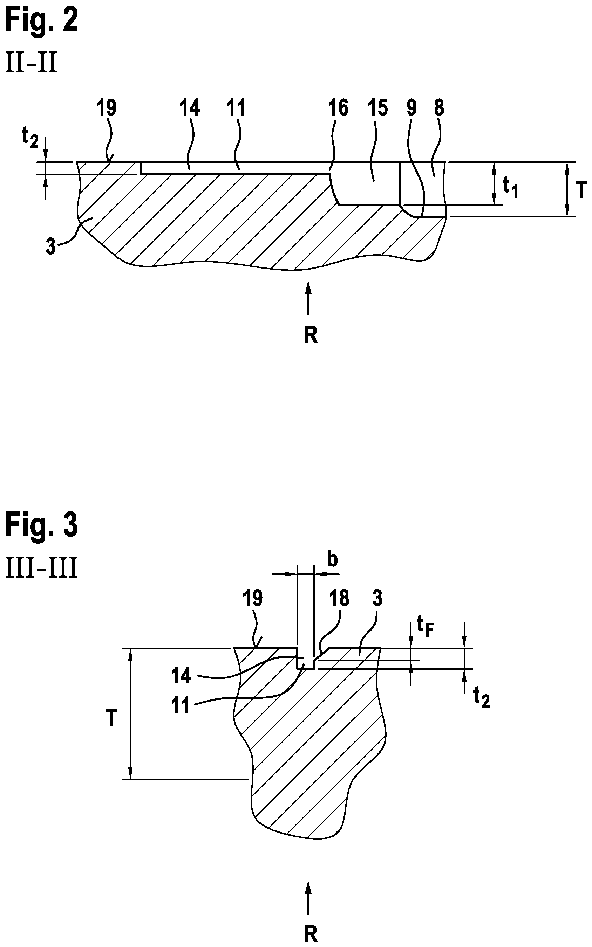

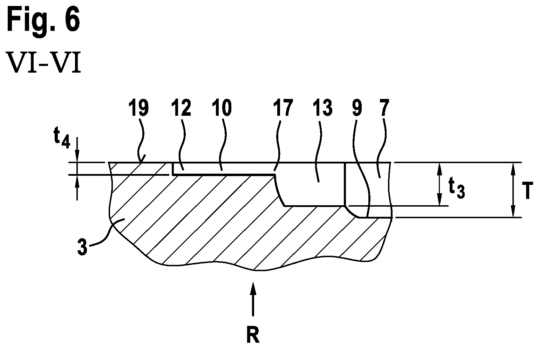

Wie in den Figuren 2 und 6 anhand der Umfangsrillen 7 und 8 dargestellt ist, sind die Umfangsrillen 6, 7 und 8 in radialer Richtung R des Fahrzeugluftreifens nach innen hin jeweils durch einen Rillengrund 9 begrenzt.

Wie in den Figuren 2 bis 6 anhand der Umfangsrippe 3 dargestellt ist, sind die Umfangsrippen 1, 2, 3 und 4 in radialer Richtung R nach außen hin durch eine im Erstreckungsbereich der Bodenaufstandsbreite T_{A} die Bodenkontaktoberfläche bildende, radial äußere Oberfläche 19 begrenzt.

Wie in Figur 1 dargestellt ist, sind in der Umfangsrippe 3 über den Umfang der Umfangsrippe 3 hinweg verteilt und in Umfangsrichtung U hintereinander angeordnet jeweils Paare von in axialer Richtung A nebeneinander angeordneten Feineinschnitten 10 und 11 ausgebildet. Die Feineinschnitte 10 sind dabei aus einem ausgehend von der Umfangsrille 7 bis zu einer Knickstelle 17 erstreckten zweiten Erstreckungsabschnitt 13 und aus einem in einer Knickstelle 17 mit dem zweiten Erstreckungsabschnitt 13 verbundenen ersten Erstreckungsabschnitt 12 ausgebildet. In analoger Weise sind die Feineinschnitte 11 aus einem ausgehend von der Umfangsrille 8 zu einer Knickstelle 16 erstreckten zweiten Erstreckungsabschnitt 15 und aus einem an der Knickstelle mit dem zweiten Erstreckungsabschnitt 15 verbundenen ersten Erstreckungsabschnitt 14 ausgebildet. Der erste Erstreckungsabschnitt 14 des Feineinschnitts 11 erstreckt sich zwischen Knickstelle 16 bis zu einem von der jeweiligen Knickstelle 16 wegweisenden Erstreckungsende des Feineinschnitts 11. Der erste Erstreckungsabschnitt 12 des Feineinschnitts 10 erstreckt sich zwischen Knickstelle 17 bis zu einem von der jeweiligen Knickstelle 17 wegweisenden Erstreckungsende des Feineinschnitts 10. Dabei sind die Feineinschnitte 11 und 10 eines Paares in ihrem jeweiligen ersten Erstreckungsabschnitt 14 und 12 des Feineinschnitts 10 jeweils längs ihrer Erstreckung zwischen Knickstelle 16 bzw. 17 und dem von der jeweiligen Knickstelle 16 bzw. 17 wegweisenden Erstreckungsende unter Einschluss eines Neigungswinkels α mit 0°≤α≤15° zur Umfangsrichtung U geradlinig parallel zueinander verlaufend ausgerichtet. Im dargestellten Ausführungsbeispiel ist α = 0° gewählt. Ausgehend von der Knickstelle 16 ist der Feineinschnitt 11 mit seinem zweiten Erstreckungsabschnitt 15 unter Einschluss eines Neigungswinkels β zur axialen Richtung A erstreckt verlaufend ausgebildet und erstreckt sich bis zur Umfangsrille 8, in welche er mündet. Ebenso ist der Feineinschnitt 10 ausgehend von der Knickstelle 17 mit seinem zweiten Erstreckungsabschnitt 13 unter Einschluss eines Neigungswinkels β zur axialen Richtung geneigt verlaufend ausgebildet und erstreckt sich bis zur Umfangsrille 7, in welche er mündet. Der Neigungswinkel β ist jeweils mit 0°≤β≤20° gewählt, beispielsweise ist β = 15° gewählt.

Dabei ist, wie in Fig.1 zu erkennen ist, der Feineinschnitt 11 längs seiner gesamten Erstreckung ausgehend von dem von der Knickstelle 16 wegweisenden Erstreckungsende des ersten Erstreckungsabschnitts 14 längs seiner Erstreckung im ersten Erstreckungsabschnitt 14, über die Knickstelle 16 und den zweiten Erstreckungsabschnitt 15 hinweg bis zu dessen Einmündung in die Umfangsrille 8 mit gleich bleibender Umfangsorientierung ausgebildet. Ebenso ist der Feineinschnitt 10 längs seiner gesamten Erstreckung ausgehend von dem von der Knickstelle 17 wegweisenden Erstreckungsende des ersten Erstreckungsabschnittes 12 längs seiner Erstreckung im ersten Erstreckungsabschnitt 12, über die Knickstelle 17 und den zweiten Erstreckungsabschnitt 13 hinweg bis zu dessen Einmündung in die Umfangsrille 7 mit gleich bleibender Umfangsorientierung ausgebildet. Die Umfangsorientierung ausgehend vom ersten Erstreckungsabschnitt 12 über den zweiten Erstreckungsabschnitt 13 des Feineinschnitts 10 entspricht dabei der Umfangsorientierung des Feineinschnittes 11 ausgehend von dessen erstem Erstreckungsabschnitt 14 über dessen zweiten Erstreckungsabschnitt 15. Der Feineinschnitt 11 ist mit seinem ersten Erstreckungsabschnitt 14 vom ersten Erstreckungsabschnitt 12 des Feineinschnittes 10 in einem Abstand a voneinander positioniert. Dabei sind auch der zweite Erstreckungsabschnitt 13 des Feineinschnitts 10 vom zweiten Erstreckungsabschnitt 15 des Feineinschnittes 11 in axialer Richtung A überlappungsfrei und voneinander beabstandet angeordnet.

Der Abstand a ist mit 2 mm ≤ a ≤ 10 mm ausgebildet. Bei üblichen Pkw-Fahrzeugluftreifen ist der Abstand a mit 5 mm ≤ a ≤ 8 mm, beispielsweise mit a = 5 mm ausgebildet.

Der Feineinschnitt 11 ist ausgehend von seiner Einmündung in die Umfangsrille 8 bis zu seinem anderen Erstreckungsende mit einer in Umfangsrichtung U des Fahrzeugluftreifens gemessenen Gesamterstreckungslänge L₁ und mit einer zwischen Knickstelle 16 und dem von der Knickstelle 16 wegweisenden Erstreckungsende des ersten Erstreckungsabschnitte 14 in Umfangsrichtung U gemessenen Erstreckungslänge L₂ des ersten Erstreckungsabschnittes 14 ausgebildet. In analoger Weise ist der Feineinschnitt 10 mit einer ausgehend von dessen Einmündung in die Umfangsrille 7 bis zu dessen anderem Erstreckungsende in Umfangsrichtung gemessenen Erstreckungslänge L₃ und mit einer zwischen Knickstelle 17 und dem von der Knickstelle 17 wegweisenden Erstreckungsende des ersten Erstreckungsabschnitte 12 in Umfangsrichtung U gemessenen Erstreckungslänge L₄ des ersten Erstreckungsabschnittes 12 ausgebildet.

Die Erstreckungslänge L₁ des Feineinschnittes 11 ist dabei größer gewählt als die Erstreckungslänge L₃ des Feineinschnittes 10.

Dabei ist L₁ mit 15 mm ≤ L₁ ≤ 30 mm und L₂ mit 0,6 L₁ ≤ L₂ ≤ L₁ ausgebildet. Im dargestellten Ausführungsbeispiel ist beispielsweise L₁ = 25 mm und L₂ = 22 mm ausgebildet.

Die Erstreckungslängen L₃ und L₄ sind mit (1/3) L₁ ≤ L₃ ≤ L₁ und (0,6 L₃) ≤ L₄ ≤ L₃ ausgebildet.

Im dargestellten Ausführungsbeispiel ist L₃ kleiner als L₁ gewählt. Beispielsweise ist L₃ = 15 mm und L₄ = 10 mm gewählt.

Im Bereich der Knickstelle 16 bzw. 17 ist der Übergang zwischen erstem Erstreckungsabschnitt 14 und zweitem Erstreckungsabschnitt 15 bzw. zwischen erstem Erstreckungsabschnitt 12 und zweitem Erstreckungsabschnitt 13 jeweils abgerundet mit einem Krümmungsradius versehen ausgebildet. Die Erstreckungslänge L₄ bzw. L₂ bemisst sich dabei jeweils zwischen dem Schnittpunkt der geradlinigen Verlängerung des ersten Erstreckungsabschnitts 14 bzw.12 mit dem zweiten Erstreckungsabschnitt 15 bzw.13 des jeweiligen Feineinschnitts 10 bzw. 11 und dem Erstreckungsende des jeweiligen ersten Erstreckungsabschnitts 14 bzw. 12 des entsprechenden Feineinschnitts 10 bzw. 11.

Wie in den Figuren 1 bis 5 zu erkennen ist, ist der Feineinschnitt 11 längs seiner Erstreckung zwischen Umfangsrille 8 und Knickstelle 16 mit einer zwischen radial äußerer Oberfläche 19 und dem den Feineinschnitt 11 nach radial innen hin begrenzenden Feineinschnittsgrund gemessenen Tiefe t₁ ausgebildet und längs seiner Erstreckung im ersten Erstreckungsabschnitt 14 zwischen der Knickstelle 16 und dem von der Knickstelle wegweisenden Erstreckungsende des ersten Feineinschnitts 14 mit einer Tiefe t₂ mit t₂ < t₁ < T, wobei T die Tiefe der Umfangsrille 8 angibt.

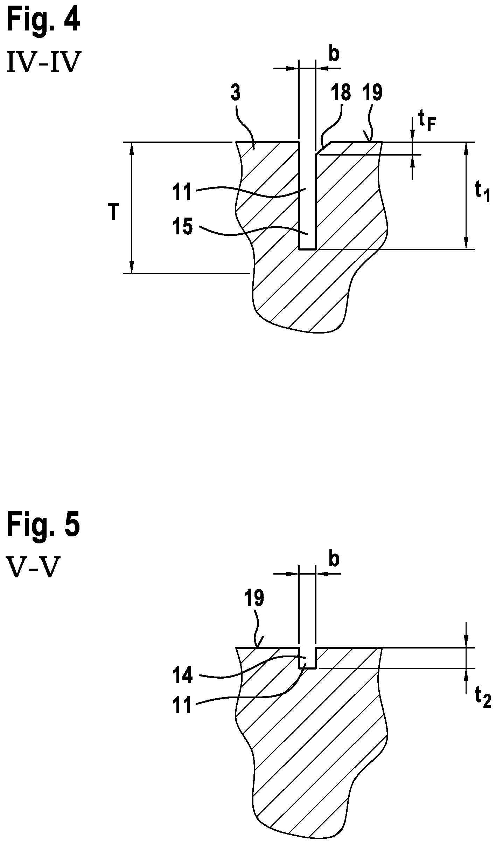

Wie in Figur 1 und 5 zu erkennen ist, ist der Feineinschnitt 10 längs seiner Erstreckung im zweiten Erstreckungsabschnitt 13 zwischen Umfangsrille 7 und Knickstelle 17 mit einer Tiefe t₃ und in seinem ersten Erstreckungsabschnitt 12 zwischen Knickstelle 17 und dem von der Knickstelle 17 wegweisenden Erstreckungsende des ersten Erstreckungsabschnitts 12 mit eine Tiefe t₄ ausgebildet mit t₄ < t₃ < T, wobei T die Tiefe der Umfangsrillen 7 und 8 angibt.

Die Tiefen sind dabei mit 6mm ≤ T ≤ 8mm, 0,8T ≤ t₁ ≤ T, 0,1T ≤ t₂ ≤ 0,3T, 0,8T ≤ t₃ ≤ T und 0,1T ≤ t₄ ≤ 0,3T ausgebildet. Beispielsweise ist T=7,5mm, t₁ = 6mm, t₂ =1,5mm, t₃ =6mm und t₄ = 1,5mm gewählt.

Wie in den Figuren 1, 3, 4 und 5 dargestellt ist, sind die Feineinschnitte dabei mit einer bis zum Feineinschnittsgrund reichenden Feineinschnittsbreite b ausgebildet mit 0,4mm ≤ b ≤ 1mm.

Der Feineinschnitt 10 eines Paares von Feineinschnitten 10 und 11 erstreckt sich jeweils mit seinem ersten Erstreckungsabschnitt 12 innerhalb des Umfangserstreckungsabschnitts des ersten Erstreckungsabschnitts 14 des Feineinschnittes 11 des Paares. Im dargestellten Ausführungsbeispiel erstreckt sich der Feineinschnitt 10 mit seiner gesamten Umfangserstreckungslänge L₃ innerhalb des Umfangserstreckungsabschnitts der Erstreckungslänge L₂ des ersten Erstreckungsabschnitts 14 des Feineinschnitts 11 des Paares.

Wie in Figur 1 zu erkennen ist, ist zwischen dem von der Knickstelle 16 wegweisenden Erstreckungsende des ersten Erstreckungsabschnitts 14 eines Feineinschnitts 11 und dem ersten Erstreckungsabschnitts 14 des diesem Erstreckungsende in Umfangsrichtung nächstliegend benachbarten Feineinschnitten 11 ein in Umfangsrichtung U gemessener Abstand d ausgebildet mit 2 mm ≤ d ≤ 10 mm, beispielsweise ist d = 5 mm gewählt. Wie in Figur 1 zu erkennen ist, ist der Abstand d dabei zwischen dem von der Knickstelle 17 wegweisenden Erstreckungsende des ersten Erstreckungsabschnitts 12 des Feineinschnittes 10 zu dem ersten Erstreckungsabschnitt 12 des nächstliegenden Feineinschnitts 10 größer ausgebildet als d.

Wie in Figur 1 sowie in den Figuren 2, 3, 4 und 5 zu erkennen ist, ist der Feineinschnitt 11 beiderseits seines Feineinschnittgrundes jeweils von einer Feineinschnittwand begrenzt, die sich in radialer Richtung R ausgehend vom Feineinschnittgrund bis zur radial äußeren Oberfläche 19 der Umfangsrippe 3 erstreckt. An derjenigen Feineinschnittwand, welche längs der Erstreckung des ersten Erstreckungsabschnitts 14 den Feineinschnitt in axialer Richtung A zur Umfangsrille 8 hin begrenzt, ist im Übergang der Feineinschnittwand zur radial äußeren Oberfläche 19 eine Fase 18 ausgebildet, welche sich längs der Erstreckung des Feineinschnitts 11 ausgehend von der Umfangsrille 8 über den gesamten zweiten Erstreckungsabschnitt 15 und über die Knickstelle 16 bis in den ersten Erstreckungsabschnitt 14 hinein erstreckt und dort mit Abstand zu dessen von der Knickstelle 16 wegweisenden Erstreckungsende vor Erreichen des Erstreckungsendes endet. Wie in den Figuren 1 und 3 ist dargestellt ist, ist die Fase im ersten von der Knickstelle 16 ausgehenden Erstreckungsbereich des ersten Erstreckungsabschnitts 14 ausgebildet und im anschließenden, zum Erstreckungsende hin ausgebildeten Erstreckungsbereich ist - wie in Figur 1 und 5 dargestellt ist - keine Fase ausgebildet.

Die Feineinschnitte 10 sind jeweils längs ihrer gesamten Erstreckung fasenfrei ausgebildet.

Figur 1 zeigt ein weiteres Ausführungsbeispiel anhand der Umfangsrippe 2, bei welcher in analoger Weise Paare von Feineinschnitten 10' und 11' in Umfangsrichtung U hintereinander angeordnet sind, die - wie oben im Zusammenhang mit den Feineinschnitten 10 und 11 beschrieben - axial nebeneinander angeordnet und jeweils mit einem ersten Erstreckungsabschnitt 12', einer Knickstelle 17' und einem zweiten Erstreckungsabschnitt 13' bzw. aus einem ersten Erstreckungsabschnitt 14', einer Knickstelle 16' und einem zweiten Erstreckungsabschnitt 15' ausgebildet sind. Bei diesem Ausführungsbeispiel ist jedoch der Winkel α mit α = 10° beispielhaft ausgebildet.

Figur 1 zeigt darüber hinaus am Ausführungsbeispiel der Umfangsrippe 2 ein Ausführungsbeispiel, bei welchem die Orientierung der Umfangserstreckungsrichtung des Feineinschnitts 11' ausgehend von dessen Einmündung in die angrenzende Umfangsrille 7 längs der Erstreckung des ersten Erstreckungsabschnitt 15' über die Knickstelle 16' und den anschließenden zweiten Erstreckungsabschnitt 14' entgegengesetzt zur Orientierung der Umfangserstreckungsrichtung des benachbarten Feineinschnittes 10' ausgehend von dessen Einmündung in die angrenzende Umfangsrille 6 über dessen zweiten Erstreckungsabschnitt 13', deren Knickstelle 17' und deren anschließenden ersten Erstreckungsabschnitt 12' ausgerichtet ist.

Figur 1 zeigt darüber hinaus anhand des Ausführungsbeispiels in der Umfangsrippe 2 ein weiteres Ausführungsbeispiel, bei welchem eine Fase 18' lediglich im ersten Erstreckungsabschnitt 15' zwischen Umfangsrille 7 und 16' ausgebildet ist und kurz vor Erreichen der Knickstelle 16' endet. Der erste Erstreckungsabschnitt 14' ist ebenso wie der zur Schulteraußenseite hinweisende Feineinschnitt 10' der Umfangsrippe 2 fasenfrei ausgebildet.

Figur 1 zeigt darüber hinaus ein weiteres Ausführungsbeispiel, bei welchem die von der Umfangsrille 7 gesehen zur Fahrzeuginnenseite IN hinweisende Umfangsrippe 3 - wie oben beschrieben bzw. in den Figuren dargestellt - mit den Paaren von Feineinschnitten 10 und 11 und die von der Umfangsrille 7 zur Außenseite OU des Fahrzeugs hin angeordnete Umfangsrippe 2 mit - wie oben beschrieben bzw. in den Figuren dargestellt - ausgebildeten Paaren von Feineinschnitten 10' und 11' ausgebildet sind.

### Bezugszeichenliste

- 1: Umfangsrippe
- 2: Umfangsrippe
- 3: Umfangsrippe
- 4: Umfangsrippe
- 5: Querrille
- 6: Umfangsrille
- 7: Umfangsrille
- 8: Umfangsrille
- 9: Rillengrund
- 10: Feineinschnitt
- 11: Feineinschnitt
- 12: Erster Erstreckungsabschnitt
- 13: Zweiter Erstreckungsabschnitt
- 14: Erster Erstreckungsabschnitt
- 15: Zweiter Erstreckungsabschnitt
- 16: Knickstelle
- 17: Knickstelle
- 18: Fase
- 19: Radial äußere Oberfläche

## Patentansprüche

1. Laufstreifenprofil eines Fahrzeugreifens - insbesondere eines PKW-Fahrzeugreifens - mit durch Umfangsrillen (6,7,8) voneinander getrennten Profilbändern (2,3) und mit in Profilbändern (2,3) ausgebildeten Feineinschnitten (10,11), mit einem Profilband (3), in welchem Feineinschnitte (10,11) mit einem ersten Erstreckungsabschnitt (12,14) mit größter Richtungskomponente der Erstreckung in Umfangsrichtung U und mit einem zweiten Erstreckungsabschnitt (13,15) mit größter Richtungskomponente in axialer Richtung A, welcher in eine Umfangsrille (7,8) mündet, ausgebildet sind, wobei erste Feineinschnitte (10), deren zweiter Erstreckungsabschnitt (13) in eine das Profilband (3) begrenzende Umfangrille (7) mündet, und zweite Feineinschnitte (11) ausgebildet sind, deren zweiter Erstreckungsabschnitt (15) in eine andere das Profilband (3) begrenzende Umfangrille (8) mündet,
wobei über den Umfang des Profilbandes (3) hinweg jeweils Paare von axial nebeneinander ausgebildeten ersten (10) und zweiten (11) Feineinschnitten ausgebildet sind, deren erster Erstreckungsabschnitt (12,14) parallel zueinander ausgerichtet und in ihrer Umfangserstreckung unter Überlappung zueinander positioniert sind,
wobei die zweiten Erstreckungsabschnitte (13,15) der beiden Feineinschnitte (10,11) axial beabstandet zueinander positioniert sind, und
wobei einer (11) der beiden (10,11) Feineinschnitte in einem Bereich seiner Erstreckung im Übergang zu der das Profilband (3) in radialer Richtung R nach außen hin begrenzenden Oberfläche (19) mit einer Fase (18) ausgebildet sind, wobei dieser Bereich bis zur Einmündung des zweiten Erstreckungsabschnitts (15) des Feineinschitts (11) in die Umfangsrille (8) erstreckt ist,
**dadurch gekennzeichnet,**
**dass** der Feineinschnitt (10,11) jeweils eine Knickstelle (17,16) im Verlauf aufweist, an der der erste Erstreckungsabschnitt (12,14) an den zweiten Erstreckungsabschnitt (13,15) grenzt, und
**dass** der mit Fase (18) ausgebildete Bereich in einem Profilband (3) ausgehend von der Umfangsrille (8) über den zweiten Erstreckungsabschnitt (15) des Feineinschnitts (11), über die Knickstelle (16) hinweg bis in den ersten Erstreckungsabschnitt (14) des Feineinschnitts (11) erstreckt ist und - insbesondere mit Abstand zu dem von der Knickstelle (16) wegweisenden Erstreckungsende des ersten Erstreckungsabschnitts (14) - endet.

2. Laufstreifenprofil gemäß den Merkmalen von Anspruch 1,
wobei bei wenigstens einem Feineinschnitt (11) des Paares der erste Erstreckungsabschnitts (14) länger erstreckt ausgebildet ist als der zweite Erstreckungsabschnitt (15).

3. Laufstreifenpröfil gemäß den Merkmalen von Anspruch 2,
wobei bei diesem Feineinschnitt (11) die Fase (18) ausgebildet ist.

4. Laufstreifenprofil gemäß den Merkmalen von einem der vorangegangenen Ansprüche,
wobei der andere Feineinschnitt (10) fasenfrei ausgebildet ist.

5. Laufstreifenprofil gemäß den Merkmalen von einem der vorangegangenen Ansprüche,
wobei der mit Fase (18') ausgebildete Bereich in einem Profilband (2) ausgehend von der Umfangsrille (7) im zweiten Erstreckungsabschnitt (15') des Feineinschnitts (11') ausgebildet ist und vor dem Übergang zum ersten Erstreckungsabschnitt (14') endet.

6. Laufstreifenprofil gemäß den Merkmalen von einem der vorangegangenen Ansprüche,
wobei der zweite Erstreckungsabschnitt (15,15',13,13') in seiner Erstreckungsverlauf unter Einschluss eines Neigungswinkels β mit 0°≤β≤30° - insbesondere mit 0°≤β≤20° - zur axialen Richtung A ausgerichtet ist, und wobei insbesondere der erste Erstreckungsabschnitt (14,14',12,12') in seiner Erstreckungsverlauf unter Einschluss eines Neigungswinkels α mit 0°≤α≤15° zur Umfangsrichtung U ausgerichtet ist.

7. Laufstreifenprofil gemäß den Merkmalen von einem der vorangegangenen Ansprüche,
wobei in einem Profilband (2) die beiden Feineinschnitte (10',11') eines Paares in ihrer Erstreckungsrichtung ausgehend von der jeweiligen Umfangsrille (6,7) über den zweiten Erstreckungsabschnitt (13',15') und den ersten Erstreckungsabschnitt (12',14') bis zu dem vom zweiten Erstreckungsabschnitt (13',15') wegweisenden Erstreckungsende des ersten Erstreckungsabschnitts (12',14') und somit des Feineinschnitts (10',11') mit zueinander entgegengesetzter Orientierung der Umfangserstreckung ausgerichtet sind.

8. Laufstreifenprofil gemäß den Merkmalen von einem der vorangegangenen Ansprüche,
wobei in einem Profilband (3) die beiden Feineinschnitte (10,11) eines Paares in ihrer Erstreckungsrichtung ausgehend von der jeweiligen Umfangsrille (7,8) über den zweiten Erstreckungsabschnitt (13,15) und den ersten Erstreckungsabschnitt (12,14) bis zu dem vom zweiten Erstreckungsabschnitt (13,15) wegweisenden Erstreckungsende des ersten Erstreckungsabschnitts (12,14) und somit des Feineinschnitts (10,11) mit gleicher Orientierung der Umfangserstreckung ausgerichtet sind.

9. Laufstreifenprofil gemäß den Merkmalen von einem der vorangegangenen Ansprüche,
wobei der eine Feineinschnitt (11) eines Paares mit einer in Umfangsrichtung U gemessenen größeren Gesamterstreckungslänge L₁ als der andere Feineinschnitt (10) ausgebildet ist, welche jeweils die in Umfangsrichtung U ausgehend von der Einmündung des zweiten Erstreckungsabschnitt (15,13) des jeweiligen Feineinschnitts (11,10) in die Umfangsrille (8,7) über den zweiten Erstreckungsabschnitt (15,13) und den ersten Erstreckungsabschnitt (14,12) bis zu dem vom zweiten Erstreckungsabschnitt (15,13) wegweisenden Erstreckungsende des ersten Erstreckungsabschnitts (14,12) und somit des Feineinschnitts (11,10) gemessene Länge angibt,
wobei bei dem längeren Feineinschnitt (11) die Gesamterstreckungslänge L₁ und die in Umfangsrichtung U gemessene Erstreckungslänge L₂ des ersten Erstreckungsabschnittes (14) mit 15mm≤ L₁ ≤30mm und 0,6L₁≤ L₂ ≤ L₁ ausgebildet sind.

10. Laufstreifenprofil gemäß den Merkmalen von Anspruch 9,
wobei der kürzere Feineinschnitt (10) des Paares mit einer in Umfangsrichtung U gemessenen Gesamterstreckungslänge L3 ausgebildet ist,
wobei bei dem kürzeren Feineinschnitt (10) die Gesamterstreckungslänge L₃ und die in Umfangsrichtung U gemessene Erstreckungslänge L₄ des ersten Erstreckungsabschnittes (12) mit (1/3)L₁≤ L₃ <L₁ und 0,6L₃≤ L₄ ≤ L₃ ausgebildet sind.

11. Laufstreifenprofil gemäß den Merkmalen von Anspruch 9 oder 10,
wobei der kürzere Feineinschnitt (10) des Paares in axialer Richtung A jeweils auf der zur Fahrzeugaußenseite (OU) hinweisenden Seite des Profilbandes (3) des Reifens und der längere (11) zur Fahrzeuginnenseite (IN) hinweisenden Seite des Profilbandes (3) des Reifens positioniert ist.

12. Laufstreifenprofil gemäß den Merkmalen von einem der vorangegangenen Ansprüche,
wobei die Feineinschnitte(10,11) eines Paares zumindest längs ihres zweiten Erstreckungsabschnitt (13,15) weitgehend mit einer größeren Tiefe t₁ ausgebildet sind als im ersten Erstreckungsabschnitt (12,14).

13. Laufstreifenprofil gemäß den Merkmalen von einem der vorangegangenen Ansprüche,
wobei die Feineinschnitte (10,11) eines Paares mit ihrem ersten Erstreckungsabschnitt (12,13) mit Abstand a 2mm≤a≤10mm - insbesondere mit 5mm≤a≤8mm - zueinander ausgebildet sind.

## Claims

1. Tread profile of a vehicle tyre - in particular a passenger vehicle tyre - with profile bands (2, 3) separated from one another by circumferential grooves (6, 7, 8) and with sipes (10, 11) formed in profile bands (2, 3), with a profile band (3) in which sipes (10, 11) having a first extension portion (12, 14) with a greater directional component of the extent in the circumferential direction U and having a second extension portion (13, 15) with a greater directional component in the axial direction A, which opens into a circumferential groove (7, 8), are formed, wherein first sipes (10), of which the second extension portion (13) opens into a circumferential groove (7) delimiting the profile band (3), and second sipes (11), of which the second extension portion (15) opens into another circumferential groove (8) delimiting the profile band (3), are formed,
wherein, over the circumference of the profile band (3), in each case pairs of first (10) and second (11) sipes are formed axially beside one another, of which the first extension portions (12, 14) are aligned parallel to one another and are positioned with an overlap with one another in the circumferential extent,
wherein the second extension portions (13, 15) of the two sipes (10, 11) are positioned axially at a distance from one another, and
wherein one (11) of the two (10, 11) sipes is formed with a chamfer (18) in a region of its extent in the transition to the surface (19) delimiting the profile band (3) outwards in the radial direction R, wherein this region extends as far as the opening of the second extension portion (15) of the sipe (11) into the circumferential groove (8),
**characterized in that**
the sipes (10, 11) each have a bend point (17, 16) in the course, at which the first extension portion (12, 14) adjoins the second extension portion (13, 15), and
the region formed with a chamfer (18) in a profile band (3), starting from the circumferential groove (8) is extended over the second extension portion (15) of the sipe (11), beyond the bend point (16), as far as the first extension portion (14) of the sipe (11), and ends - in particular at a distance from the extension end of the first extension portion (14) that points away from the bend point (16) .

2. Tread profile according to the features of Claim 1,
wherein, in at least one sipe (11) of the pair, the first extension portion (14) extends further than the second extension portion (15).

3. Tread profile according to the features of Claim 2,
wherein the chamfer (18) is formed in this sipe (11) .

4. Tread profile according to the features of one of the preceding claims,
wherein the other sipe (10) is formed without a chamfer.

5. Tread profile according to the features of one of the preceding claims,
wherein the region formed with a chamfer (18') in a profile band (2), starting from the circumferential groove (7), is formed in the second extension portion (15') of the sipe (11') and ends before the transition to the first extension portion (14').

6. Tread profile according to the features of one of the preceding claims,
wherein the second extension portion (15, 15', 13, 13') is aligned in its extension course with the inclusion of an inclination angle β with 0° ≤ β ≤ 30° - in particular with 0° ≤ β ≤ 20° -,
and
wherein in particular the first extension portion (14, 14', 12, 12') is aligned in its extension course with the inclusion of an inclination angle α with 0° ≤ α ≤ 15° relative to the circumferential direction U.

7. Tread profile according to the features of one of the preceding claims,
wherein in a profile band (2), the two sipes (10', 11') of a pair in the extension direction starting from the respective circumferential groove (6, 7) via the second extension portion (13', 15') and the first extension portion (12', 14') as far as the extension end of the first extension portion (12', 14') that points away from the second extension portion (13', 15') and thus the sipe (10', 11'), are aligned with mutually opposite orientations of the circumferential extent.

8. Tread profile according to the features of one of the preceding claims,
wherein in a profile band (3), the two sipes (10, 11) of a pair in the extension direction starting from the respective circumferential groove (7, 8) via the second extension portion (13, 15) and the first extension portion (12, 14) as far as the extension end of the first extension portion (12, 14) that points away from the second extension portion (13, 15) and thus the sipe (10, 11), are aligned with the same orientation of the circumferential extent.

9. Tread profile according to the features of one of the preceding claims,
wherein the one sipe (11) of a pair is formed with a greater overall extension length L₁, measured in the circumferential direction U, than the other sipe (10), which in each case indicates the length, measured in the circumferential direction U, starting from the opening of the second extension portion (15, 13) of the respective sipe (11, 10) into the circumferential groove (8, 7) via the second extension portion (15, 13) and the first extension portion (14, 12) as far as an extension end of the first extension portion (14, 12) pointing away from the second extension portion (15, 13), and thus of the sipe (11, 10), wherein in the longer sipe (11), the overall extension length L₁ and the extension length L₂ of the first extension portion (14), measured in the circumferential direction U, are formed with 15 mm ≤ L₁ ≤ 30 mm and 0.6L₁ ≤ L₂ ≤ L₁.

10. Tread profile according to the features of Claim 9,
wherein the shorter side (10) of the pair is formed with an overall extension length L₃,
measured in the circumferential direction U, wherein in the shorter sipe (10), the overall extension length L₃ and the extension length L₄ of the first extension portion (12), measured in the circumferential direction U, are formed with (1/3)L₁ ≤ L₃ < L₁ and 0.6L₃ ≤ L₄ ≤ L₃.

11. Tread profile according to the features of Claim 9 or 10,
wherein the shorter sipe (10) of the pair is positioned in the axial direction A in each case on the side of the profile band (3) of the tyre that points towards the vehicle outer side (OU), and the longer (11) on the side of the profile band (3) that points towards the vehicle inner side (IN).

12. Tread profile according to the features of one of the preceding claims,
wherein the sipes (10, 11) of a pair are largely formed with a greater depth t₁, at least along the second extension portion (13, 15), than in the first extension portion (12, 14).

13. Tread profile according to the features of one of the preceding claims,
wherein the sipes (10, 11) of a pair are formed with their first extension portion (12, 13) with a spacing a 2mm ≤ a ≤ 10mm - in particular with 5mm ≤ a ≤ 8mm - relative to one another.

## Revendications

1. Profilé de bande de roulement d'un pneumatique de véhicule, en particulier d'un pneumatique de véhicule particulière, le profilé de bande de roulement comprenant des bandes profilées (2, 3) séparées les unes de autres par des rainures circonférentielles (6, 7, 8) et de fines incisions (10, 11) ménagées dans des bandes profilées (2, 3), une bande profilée (3) dans laquelle de fines incisions (10, 11) pourvues d'une première portion d'extension (12, 14) dont la composante directionnelle de l'extension est plus grande dans la direction circonférentielle U et d'une deuxième portion d'extension (13, 15) dont la composante directionnelle est plus grande dans la direction axiale A et qui débouche dans une rainure circonférentielle (7, 8), des premières incisions (10), dont la deuxième portion d'extension (13) débouche dans une rainure circonférentielle (7) délimitant la bande profilée (3), étant ménagées et des deuxièmes incisions (11), dont la deuxième portion d'extension (15) débouche dans une autre rainure circonférentielle (8) délimitant la bande profilée (3), étant ménagées, des paires de première fines incisions (10) et de deuxièmes fines incisions (11), ménagées axialement les unes à côté des autres, étant formées sur la circonférence de la bande profilée (3), paires dont les premières portions d'extension (12, 14) sont orientées parallèlement les unes aux autres et sont positionnées dans leur extension circonférentielle de manière à se chevaucher, les deuxièmes portions d'extension (13, 15) des deux fines incisions (10, 11) étant positionnées axialement à distance l'une de l'autre, et l'une (11) des deux fines incisions (10, 11) étant ménagée avec un chanfrein (18) dans une région de son extension dans la transition avec la surface (19) délimitant la bande profilée (3) vers l'extérieur dans la direction radiale R, ladite région s'étendant jusqu'à l'endroit où la deuxième portion d'extension (15) de la fine incision (11) débouche dans la rainure circonférentielle (8),
**caractérisé en ce que**
chaque fine incision (10, 11) comporte un point d'inflexion (17, 16) au niveau duquel la première portion d'extension (12, 14) est adjacente à la deuxième portion d'extension (13, 15), et
**en ce que** la région réalisée avec le chanfrein (18) s'étend dans une bande profilée (3) depuis la rainure circonférentielle (8) sur la deuxième portion d'extension (15) de la fine incision (11), au-delà du point d'inflexion (16), jusque dans la première portion d'extension (14) de la fine incision (11) et se termine en particulier à distance de l'extrémité d'extension, à l'opposé du point d'inflexion (16), de la première portion d'extension (14).

2. Profilé de bande de roulement selon les caractéristiques de la revendication 1,
dans au moins une fine incision (11) de la paire la première portion d'extension (14) s'étend sur une plus grande longueur que la deuxième portion d'extension (15) .

3. Profilé de bande de roulement selon les caractéristiques de la revendication 2, le chanfrein (18) étant formé dans ladite fine incision (11).

4. Profilé de bande de roulement selon les caractéristiques de l'une des revendications précédentes,
l'autre fine incision (10) étant formée sans chanfrein.

5. Profilé de bande de roulement selon les caractéristiques de l'une des revendications précédentes,
la région réalisée avec un chanfrein (18') étant formée dans une bande profilée (2) à partir de la rainure circonférentielle (7) dans la deuxième portion d'extension (15') de la fine incision (11') et se terminant avant la transition vers la première portion d'extension (14').

6. Profilé de bande de roulement selon les caractéristiques de l'une des revendications précédentes,
la deuxième portion d'extension (15, 15', 13, 13') étant orientée dans son extension avec un angle d'inclinaison β, avec 0°≤β≤30°, en particulier avec 0°≤β≤20°, par rapport à la direction axiale A et en particulier la première portion d'extension (14, 14', 12, 12') étant orientée dans son extension avec un angle d'inclinaison β, avec 0°≤α≤15°, par rapport à la direction circonférentielle U.

7. Profilé de bande de roulement selon les caractéristiques de l'une des revendications précédentes,
dans une bande profilée (2) les deux fines incisions (10', 11') d'une paire étant orientées dans leur direction d'extension depuis la rainure circonférentielle respective (6, 7) sur la deuxième portion d'extension (13', 15') et la première portion d'extension (12', 14') jusqu'à l'extrémité d'extension, à l'opposé de la deuxième portion d'extension (13', 15'), de la première portion d'extension (12', 14') et donc de la fine incision (10', 11') avec une orientation opposée de l'extension circonférentielle.

8. Profilé de bande de roulement selon les caractéristiques de l'une .des revendications précédentes,
dans une bande profilée (3) les deux fines incisions (10, 11) d'une paire étant orientées dans leur direction d'extension depuis la rainure circonférentielle respective (7, 8) sur la deuxième portion d'extension (13, 15) et la première portion d'extension (12, 14) jusqu'à l'extrémité d'extension, à l'opposé de la deuxième portion d'extension (13, 15), de la première portion d'extension (12, 14) et donc de la fine incision (10, 11) avec une même orientation de l'extension circonférentielle.

9. Profilé de bande de roulement selon les caractéristiques de l'une des revendications précédentes,
une première fine incision (11) d'une paire étant formée avec une longueur d'extension totale L₁ supérieure, dans la direction circonférentielle U, à celle de l'autre fine incision (10), qui indique la longueur mesurée dans la direction circonférentielle U depuis l'endroit où la deuxième portion d'extension (15, 13) de la fine incision respective (11, 10) débouche dans la rainure circonférentielle (8, 7) sur la deuxième portion d'extension (15, 13) et la première portion d'extension (14, 12) jusqu'à l'extrémité d'extension, à l'opposé à la deuxième portion d'extension (15, 13), de la première portion d'extension (14, 12) et donc de la fine incision (11, 10),
dans le cas de la plus longue fine incision (11) la longueur d'extension totale L₁ et la longueur d'extension L₂, mesurée dans la direction circonférentielle U, de la première portion d'extension (14) est de 15 mm≤L₁≤30mm et de 0, 6L₁≤L₂≤L₁.

10. Profilé de bande de roulement selon les caractéristiques de la revendication 9,
la plus courte fine incision (10) de la paire étant formée avec une longueur d'extension totale L₃ mesurée dans la direction circonférentielle U,
dans le cas de la plus courte fine incision (10) la longueur d'extension totale L₃ et la longueur d'extension L₄ de la première portion d'extension (12) mesurées dans la direction circonférentielle U étant de (1/3)L₁≤L₃≤L₁ et 0,6L₃≤L₄≤L₃.

11. Profilé de bande de roulement selon les caractéristiques de la revendication 9 ou 10,
la plus courte fine incision (10) de la paire étant positionnée dans la direction axiale A respectivement du côté, dirigé vers le côté extérieur de véhicule (OU), du profilé (3) du pneumatique et du côté le plus long (11), dirigé vers le côté intérieur de véhicule (IN), de la bande profilé (3) du pneumatique.

12. Profilé de bande de roulement selon les caractéristiques de l'une des revendications précédentes,
les fines incisions (10, 11) d'une paire étant formées au moins le long de sa deuxième portion d'extension (13, 15) en grande partie avec une profondeur t₁ supérieure à celle de la première portion d'extension (12, 14).

13. Profilé de bande de roulement selon les caractéristiques de l'une des revendications précédentes,
les fines incisons (10, 11) d'une paire étant formées avec leur première portion d'extension (12, 13) à une distance a les unes des autres, avec 2mm≤a≤10mm, en particulier 5mm≤a≤8mm.
